Europäisches Patentamt

European Patent Office

Office européen des brevets

(19)

(11) Veröffentlichungsnummer: **0 091 670**
A2

(12) # EUROPÄISCHE PATENTANMELDUNG

(21) Anmeldenummer: **83103419.4**

(22) Anmeldetag: **08.04.83**

(51) Int. Cl.³: **B 65 B 35/50**
**B 65 G 57/03**

(30) Priorität: **10.04.82 DE 3213548**

(43) Veröffentlichungstag der Anmeldung:
**19.10.83 Patentblatt 83/42**

(84) Benannte Vertragsstaaten:
**DE FR GB IT**

(71) Anmelder: **IWK Verpackungstechnik GmbH**
**Singerstrasse**
**D-7513 Stutensee-Blankenloch(DE)**

(72) Erfinder: **Gutzy, Detlef**
**Etzelstrasse 35**
**D-7513 Stutensee-Blankenloch(DE)**

(74) Vertreter: **Dr.-Ing. Hans Lichti Dipl.-Ing. Heiner Lichti**
**Dipl.-Phys. Jost Lempert**
**Postfach 41 07 60 Durlacher Strasse 31**
**D-7500 Karlsruhe 41(DE)**

(54) **Vorrichtung zum Einstapeln von flachen Verpackungen, wie Blisterpackungen oder dergleichen, in einem Stapelschacht.**

(57) Bei einer Vorrichtung zum Einstapeln von flachen Verpackungen, wie Blisterpackungen oder dgl., in einem Stapelschacht mit einem die Verpackungen heranführenden Förderer weist dieser in festem Abstand voneinander angeordnete Mitnehmer für je eine auf einer ihrer ebenen Seiten aufliegenden Verpackung auf, wobei am Stapelschacht Auflager etwa in Höhe der Förderebene angeordnet sind, die zwischen einer die ankommende Verpackung unterfangenden Position innerhalb des Stapelschachtes und einer sie freigebenden Position synchron mit den Mitnehmern des Förderers bewegbar sind. Hierdurch wird die gegen die Rückwand des Stapelschachtes anlaufende Verpackung kurzfristig in Ruhestellung gebracht und in einer definierten Lage in den Stapelschacht abgeworfen, so daß es nicht zu Verkanten und Verklemmungen der Verpackungen innerhalb des Stapelschachtes kommen kann.

DR. ING. HANS LICHTI · DIPL.-ING. HEINER LICHTI

DIPL.-PHYS. DR. JOST LEMPERT

PATENTANWÄLTE

D-7500 KARLSRUHE 41 (GRÖTZINGEN) · DURLACHER STR. 31 (HOCHHAUS)

TELEFON (0721) 48511

**0091670**

– 1 –

07.April 1983

6806/83

IWK Verpackungstechnik GmbH

Singerstraße

D-7513  Stutensee-Blankenloch

Vorrichtung zum Einstapeln von flachen Verpackungen, wie
Blisterpackungen oder dgl.,in einem Stapelschacht

– – – – – –

Die Erfindung betrifft eine Vorrichtung zum Einstapeln von flachen
Verpackungen , wie Blisterpackungen oder dgl., in einem Stapelschacht mit einem die Verpackung zuführenden Förderer, an dessen Abgabeende der Stapelschacht mit seiner Frontwand angeordnet ist und
gegen dessen Rückwand die Verpackungen anlaufen, bevor sie in den
Stapelschacht fallen, und mit einem die Verpackungen am unteren
Ende des Stapelschachtes einzeln oder zu mehreren abziehenden
Förderer.

Flache Verpackungen, insbesondere Blisterpackungen, wie sie beispielsweise zum Verpacken von Tabletten oder anderen kleinen Gegenständen üblich sind, müssen häufig einzeln oder zu mehreren in eine

p

– 2 –

- 2 -

größere, kartonartige Verkaufspackung eingebracht werden. Hierzu müssen die von einer Blistermaschine kommenden Blisterpackungen mit den aus einer Kartoniermaschine kommenden Faltschachteln zusammengeführt werden. Die exakte maschinelle Zuführung der Blisterpackungen bereitet dabei erhebliche Schwierigkeiten, da diese Blisterpackungen relativ leicht sind und nur eine begrenzte Formstabilität aufweisen mit der Folge, daß sie sich insbesondere bei hohen Fördergeschwindigkeiten auf einem Förderer leicht verlagern. Noch größere Schwierigkeiten jedoch entstehen beim Einstapeln solcher Blisterpackungen in einen Stapelschacht, aus dem sie einzeln oder zugleich zu mehreren abgezogen und beispielsweise einer Kartoniermaschine zugeleitet werden. Bisher werden die Blisterpackungen vom Abgabeende des zuführenden Förderers aufgrund ihrer Beschleunigung noch bis in den Einwurfbereich des Stapelschachtes transportiert und fallen dann dort nach unten. Hierbei kommt es sehr häufig zu Flatterbewegungen und schließlich zum Verkanten der Blisterpackungen innerhalb des Stapelschachtes. Da ferner die Blisterpackungen auf wenigstens einer Seite nicht eben sind, kann es ferner zum Verhaken der Blisterpackungen untereinander kommen. Diese Umstände führen zu Funktionsstörungen vor allem beim Abziehen der Blisterpackungen aus dem Stapelschacht.

Der Erfindung liegt die Aufgabe zugrunde, eine Vorrichtung des eingangs geschilderten Aufbaus so auszubilden, daß die flachen Verpackungen einwandfrei eingestapelt werden und es demzufolge beim Abziehen der Verpackungen aus dem Stapelschacht nicht zu Funktionsstörungen kommt.

Diese Aufgabe wird gemäß der Erfindung dadurch gelöst, daß der Förderer an sich bekannte, in festem Abstand voneinander angeordnete Mitnehmer für je eine Verpackung aufweist und die Verpackungen auf einer ihrer ebenen Flächen liegend aufnimmt und daß am Stapelschacht Auflager etwa in Höhe der Förderebene angeordnet sind, die zwischen einer die ankommende Verpackung unterfangenden Position innerhalb des Stapelschachtes und einer sie freigebenden Position synchron mit den Mitnehmern des zuführenden Förderers bewegbar sind.

Durch dieses Grundprinzip der Erfindung wird die vom Förderer herangebrachte und an die Rückwand des Stapelschachtes anstoßende Verpackung von den Auflagern in horizontaler Lage unterfangen und dadurch zumindest für einen kurzen Moment in einer Ruhelage gehalten. Durch die Bewegung der Auflager gelangen diese dann in eine Position, in der sie die horizontal liegende Verpackung freigeben, so daß diese in ihrer horizontalen Lage den Restweg innerhalb des Stapelschachtes herunterfällt. Da aufgrund der Beruhigung der Verpackung keine Impulskräfte mehr auf sie einwirken, wird sie im allgemeinen annähernd horizontal im Stapelschacht bis auf die oberste dort bereits eingestapelte Verpackung fallen. Selbst kleinere Neigungsbewegungen können nicht zum Verkanten oder gar Verklemmen führen. Durch die Synchronisation des Förderers und der Bewegung der Auflager ist stets sichergestellt, daß in dem Augenblick, in dem eine Verpackung in den Einwurfbereich des Stapelschachtes gelangt, sich dort auch die Auflager befinden, um die Verpackung zu übernehmen.

Es ist zwar beim Abziehen von Blisterpackungen aus einem Stapelschacht bekannt (DE-OS 28 54 990) den Stapelschacht mit Abstand oberhalb des abziehenden Förderers anzuordnen und die beiden unteren Blisterpackungen des Stapels jeweils mit seitlich in den Schacht hineinragenden Stiften zu unterfangen und durch wechselweises Ein- bzw. Ausfahren dieser Stifte jeweils eine Blisterpackung an den abziehenden Förderer abzugeben, jedoch erfüllen hier die Stifte nur die Aufgabe, den Stapel zurückzuhalten bzw. jeweils die untere Blister-packung abfallen zu lassen. Statt der Stifte als Rückhalteorgane sind auch um eine senkrechte Achse drehbare Schraubengänge bekannt, mittels der die unterste Blisterpackung kontinuierlich nach unten aus dem Schacht herausgefördert wird.

Gemäß einer bevorzugten Weiterbildung des Grundgedankens der Erfindung weist die Bewegungsbahn der Auflager einen die Verpackung auf einem Teil ihrer Bewegung im Stapelschacht nach unten führenden Ab-schnitt auf.

Diese Ausführungsform hat den Vorteil, daß die Verpackung zumindest beim Beginn ihrer Abwärtsbewegung noch geführt wird mit der Folge, daß die dabei von einer Schachtwand, an der sie möglicherweise beim Einlaufen noch anliegt, freikommt und damit von den Auflagern im wirklich freien Fall abgegeben wird.

Gemäß einer weiteren bevorzugten Ausführungsform ist zwischen dem zuführenden Förderer und dem Stapelschacht ein den Verpackungen ober-seitig aufliegendes, umlaufendes Führungsband angeordnet, das bis über die Rückwand des Stapelschachtes hinausreicht.

Durch diese Ausbildung ist zum einen gewährleistet, daß die Verpackung auch hinter dem Abgabeende des zuführenden Förderers noch einer gleichbleibenden Förderkraft unterworfen ist und sonach mit stets gleichbleibender Geschwindigkeit in den Einwurfbereich des Stapelschachtes transportiert wird, andererseits wird die Verpackung bis zur Auflage auf den Auflagern einwandfrei geführt. Dies ist insbesondere bei Blisterpackungen von Wichtigkeit, die aufgrund ihrer leicht biegsamen Trägerschicht sich häufig etwas verbiegen. Mit dem erfindungsgemäßen Führungsband werden solche Blisterpackungen stets eben ausgerichtet.

Dem gleichen Zweck dient die weitere erfindungsgemäße Maßnahme, wonach die Bewegungsbahn der Auflager von der die Verpackung unterfangenden Position einen kurzen nach oben gegen das Führungsband gerichteten Abschnitt aufweist, an dessen Ende der nach unten führende Abschnitt anschließt.

Durch diese Maßnahme wird auf die auf die Auflager gelangende Verpackung ein Druck gegen das Führungsband ausgeübt, wodurch einerseits eine ebene Ausrichtung, andererseits auch eine vollständige Ruhestellung der Verpackung vor ihrer Abwärtsbewegung erreicht wird.

Gemäß einem einfachsten Ausführungsbeispiel können die Auflager als in den Stapelschacht eingreifende Schieber ausgebildet sein, die die Verpackung beispielsweise an gegenüberliegenden Längsseiten in voller Länge unterfangen.

Gemäß einem anderen Ausführungsbeispiel sind die Auflager von wenigstens zwei im Bereich von gegenüberliegenden Wänden des Stapelschachtes angeordneten, gegensinnig drehbaren Stäben gebildet, die je eine nur auf einem Teil ihrer Bewegungsbahn in den Stapelschacht eingreifende Auflagerfläche aufweisen.

Die Auflagerflächen übernehmen die Verpackungen im Bereich ihrer oberen Totpunktlage, führen sie während ihrer Bewegung innerhalb des Schachtes nach unten und werfen sie schließlich ab, um dann auf ihrer weiteren Bewegungsbahn außerhalb des Stapelschachtes wieder in ihrer obere Totpunktlage zu gelangen.

Hiermit ist eine insbesondere in antriebs- und steuerungstechnischer Hinsicht besonders einfache Ausführungsform gegeben. Die Stäbe können dabei aus Rundmaterial mit einer längs verlaufenden V-förmigen Nut gebildet sein und ihre Drehachse etwa in der Ebene der Schachtwände liegen. Die Auflagerfläche wird von der jeweils vorlaufenden Fläche der V-förmigen Nut gebildet, wobei durch entsprechende Gestaltung im Einlaufbereich der V-Nut eine einwandfreie Übergabe der Verpackung an die Stäbe, wie auch eine einwandfreie Abgabe gewährleistet werden kann.

Gemäß einer bevorzugten Ausführungsform bilden die Stäbe selbst die Auflagerfläche und sind um eine zu ihrer Achse parallele Achse drehbar angetrieben, wobei sie im Bereich ihrer oberen Totpunktlage in der Förderebene des zuführenden Förderers liegen und die ankommende Verpackung aufnehmen, sich anschließend durch den Schacht bewegen und im Bereich ihrer unteren Totpunktlage die Verpackung abwerfen, während sie sich auf dem Rest ihrer Bahn außerhalb des Stapelschachtes bewegen.

Diese Ausbildung schafft die Möglichkeit, durch entsprechenden Abstand der Auflagerstäbe von ihrer Drehachse den Führungsweg der Verpackung innerhalb des Stapelschachtes und damit den restlichen Fallweg zu optimieren. Während der Drehbewegung der Auflagerstäbe wälzen sie sich etwa auf der Hälfte ihres Umfangs auf der ebenen Unterseite der Verpackung ab.

Eine noch größere Arbeitsgeschwindigkeit beim Einstapeln läßt sich dadurch erreichen, daß an jeder Drehachse mit gleichem Abstand von dieser und einander gegenüberliegend zwei stabförmige Auflager angeordnet sind, so daß die jeweils oben befindlichen stabförmigen Auflager eine Verpackung aufnehmen, während die jeweils unten befindlichen stabförmigen Auflager eine zuvor bereits eingebrachte Verpackung abwerfen.

Mit Vorteil drehen die stabförmigen Auflager kurz vor Erreichen ihrer oberen Totpunktlage in den Schacht hinein, nehmen also in dieser Position die ankommende Verpackung auf. Bis zum Erreichen der oberen Totpunktlage wird die Verpackung dann noch etwas gegen das darüber laufende Führungsband gedrückt und ausgerichtet.

Eine besonders einfache Ausbildung ergibt sich dadurch, daß die Stäbe mit jeweils gemeinsamer Drehachse außerhalb des Stapelschachtes miteinander verbunden und an dem Verbindungsstück angetrieben sind. Die Stäbe bilden also zusammen mit dem Verbindungsstück eine Art drehende Gabel.

Weitere zweckmäßige Maßnahmen im Rahmen vorgenannter Ausführungsformen sind in den Ansprüchen 13 bis 15 gekennzeichnet.

Nachstehend ist die Erfindung anhand einiger in der Zeichnung schematisch dargestellter Ausführungsformen beschrieben.

In der Zeichnung zeigen:

Firgur 1        eine schematische Seitenansicht einer Ausführungsform der Vorrichtung;

Figur 2        eine gegenüber Figur 1 vergrößerte Stirnansicht des Stapelschachtes;

Figur 3        eine der Figur 2 ähnliche Darstellung einer anderen Ausführungsform des Stapelschachtes;

Figur 4        eine Draufsicht auf die Ausführungsform gemäß Figur 3 beim Einlaufen einer Verpackung;

Figur 5        eine der Figur 2 und 3 ähnliche schematische Ansicht einer weiteren Ausführungsform des Stapelschachtes und

Figur 6        eine Draufsicht zu Figur 5.

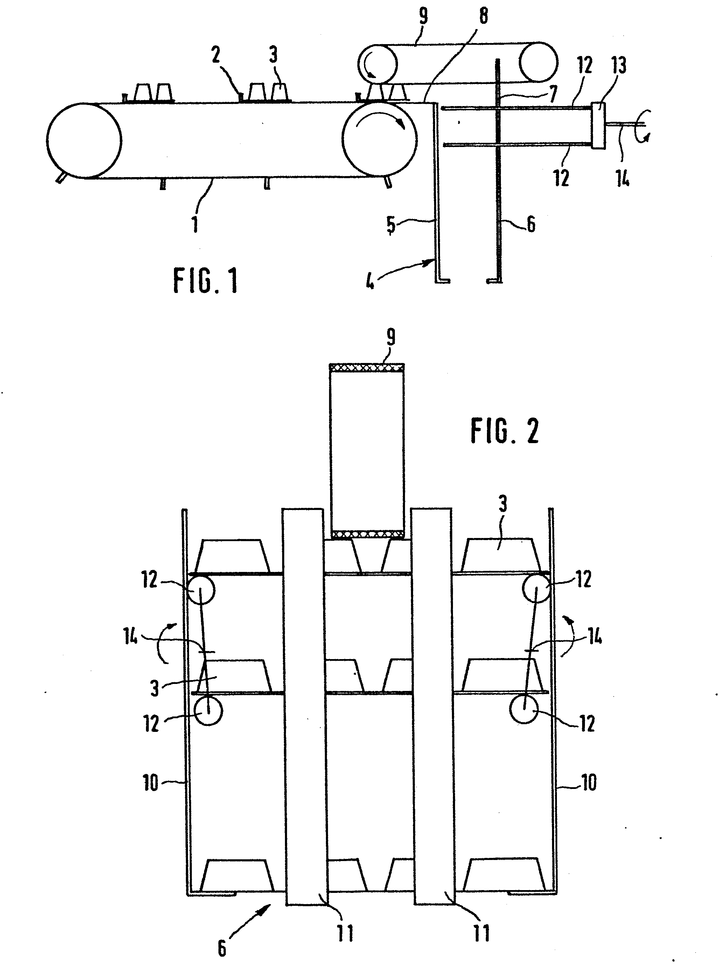

In Figur 1 ist der zuführende Förderer 1 erkennbar, der in festem Abstand voneinander Mitnehmer 2 als eigentliche Förderorgane aufweist. Auf dem Förderer 1 liegen Blisterpackungen 3 mit ihrer ebenen Seite nach unten und werden jeweils einzeln von den Mitnehmern 2 transportiert. Am Abgabeende des Förderers 1 ist ein insgesamt mit 4 bezeichneter Stapelschacht mit seiner Vorderwand 5 angesetzt, dessen gegenüberliegende Rückwand 6 mit einem Abschnitt 7 nach oben verlängert ist. Zwischen dem Abgabeende des Förderers 1 und der Vorderwand 5 des Stapelschachtes 4 ist eine Brücke 8 angeordnet, durch die die Mitnehmer 2 nach unten wegtauchen, so daß die Blisterpackung 3 auf der Brücke 8 bis zur Rückwand 7 des Stapelschachtes 4 weiterrutscht.

Oberhalb des Stapelschachtes ist zwischen diesem und dem Abgabeende des Förderers 1 ein endlos umlaufendes Führungsband 9 angeordnet, das den Blisterpackungen 3 an der Oberseite ihrer Erhöhungen aufliegt und die Transportbewegung bis zum Stapelschacht 4 in definierter Weise fortsetzt.

Die von Vorderwand 5 und Rückwand 6 sowie von den beiden Seitenwänden 10 gebildete lichte Weite des Stapelschachtes 4 entspricht etwa der Umrißform der einzustapelnden Blisterpackungen 3. Figur 2 zeigt, daß die Rückwand lediglich aus einzelnen Leisten 11 gebildet ist, während die Seitenwände 10 weitgehend geschlossen sein können. Im Einwurfbereich des Stapelschachtes 4 sind mit Abstand voneinander im Bereich der Seitenwände 10 stab- bzw. stiftförmige Auflager 12 paarweise angeordnet, die außerhalb des Stapelschachtes (Figur 1) über ein Verbindungsstück 13 miteinander verbunden sind. Die stabförmigen Auflager 12 sind um eine mittige Achse 14 drehbar, wobei sie sich, wie Figur 2 erkennen läßt, nur auf einem Teil ihrer Bahn innerhalb des Stapelschachtes bewegen. Die Seitenwände 10 weisen zu diesem Zweck entsprechende Aussparungen auf. Die jeweils paarweise im Bereich jeder Seitenwand 10 angeordneten stabförmigen Auflager 12 laufen gegensinnig um. Sie wandern kurz vor Erreichen ihrer oberen Totpunktlage in den Stapelschacht hinein, unterfangen dort die einlaufende Blisterpackung 3, drücken diese bis zum Erreichen der oberen Totpunktlage gegen das Führungsband 9 und führen sie dann auf ihrem weiteren Weg nach unten in die in Figur 2 dargestellte Lage. Bei weiterer Drehung der jetzt unteren stabförmigen Auflager 12 wandern diese durch die Aussparung in den Seitenwänden 10 nach außerhalb des Stapelschachtes und geben die untere Blisterpackung 3 frei, die dann im freien Fall auf die oberste im Stapelschacht 4 befindliche Blisterpackung 15 fällt. Aus dem Stapelschacht 4 werden die Verpackungen in nicht näher gezeigter Weise, z. B. wiederum mittels Mitnehmerstiften oder dgl. einzeln oder zu mehreren übereinander abgezogen. Es kann aber am unteren Ende des Stapelschachtes auch eine bekannte Einrichtung zum Entstapeln nach unten vorgesehen sein.

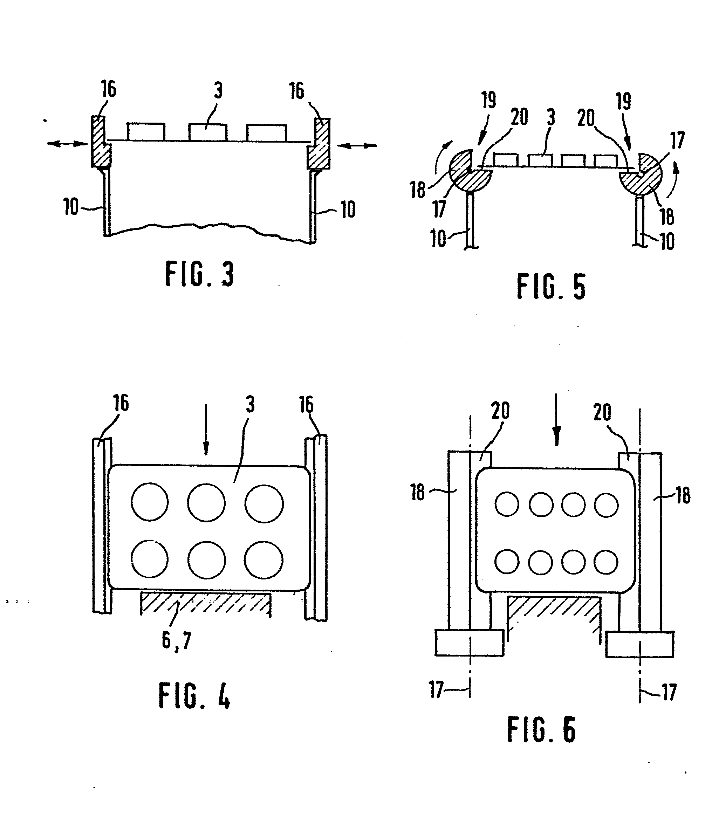

Bei der Ausführungsform gemäß Figur 3 sind im oberen Bereich der Seitenwände 10 Auflager in Form von Schiebern 16 mit einer Art Winkelprofil angeordnet, die in Richtung der angedeuteten Pfeile aus einer Position innerhalb des Auflagerschachtes, in der sie die Blisterpackung 3 aufnehmen, in eine Position verschiebbar sind, in der sie die Blisterpackung 3 freigeben.

Bei der Ausführungsform gemäß Figuren 5 und 6 sind die Auflager wiederum um Achsen 17 drehbar. Sie bestehen bei diesem Ausführungsbeispiel aus längs der Seitenwände 10 verlaufenden Rundstäben 18, deren Drehachse mit der eigenen Längsachse zusammenfällt. Sie weisen V-förmige Nuten 19 auf, deren jeweils vorlaufende Fläche 20 die Auflagerfläche für die Blisterpackungen 3 bildet.

p

– 1 –

07. April 1983

6806/83

IWK Verpackungstechnik GmbH

Singerstraße

D-7513 Stutensee-Blankenloch

P a t e n t a n s p r ü c h e

1. Vorrichtung zum Einstapeln von flachen Verpackungen, wie Blisterpackungen oder dgl., in einem Stapelschacht mit einem die Verpackungen zuführenden Förderer, an dessen Abgabeende der Stapelschacht mit seiner Frontwand angeordnet ist und gegen dessen Rückwand die Verpackungen anlaufen, bevor sie in den Stapelschacht fallen, und mit einem die Verpackungen am unteren Ende des Stapelschachtes einzeln oder zu mehreren abziehenden Förderer, d a d u r c h   g e k e n n z e i c h n e t , daß der Förderer (1) an sich bekannte, in festem Abstand voneinander angeordnete Mitnehmer (2) für je eine Verpackung (3) aufweist und daß am Stapelschacht (4) Auflager (12) etwa in Höhe der Förderebene angeordnet sind, die zwischen einer die ankommende Verpackung (3) unterfangenden Position innerhalb des Stapelschachtes (4) und einer sie freigebenden Position synchron mit den Mitnehmern (2) des zuführenden Förderers (1) bewegbar sind.

p

– 2 –

**0091670**

2. Vorrichtung nach Anspruch 1, dadurch gekennzeichnet, daß die Bewegungsbahn der Auflager (12) einen die Verpackung (3) auf einem Teil ihrer Bewegung im Stapelschacht (4) nach unten führenden Abschnitt aufweist.

3. Vorrichtung nach Anspruch 1 oder 2, dadurch gekennzeichnet, daß zwischen dem zuführenden Förderer (1) und dem Stapelschacht (4) ein den Verpackungen (3) oberseitig aufliegendes umlaufendes Führungsband (9) angeordnet ist, das bis über die Rückwand (6) des Stapelschachtes (4) hinausreicht.

4. Vorrichtung nach einem der Ansprüche 1 bis 3, dadurch gekennzeichnet, daß die Bewegungsbahn der Auflager (12) von der die Verpackung (3) unterfangenden Position einen kurzen nach oben gegen das Führungsband (9) gerichteten Abschnitt aufweist, an dessen Ende der nach unten führende Abschnitt anschließt.

5. Vorrichtung nach Anspruch 1, dadurch gekennzeichnet, daß die Auflager als in den Stapelschacht (4) eingreifende Schieber (16) ausgebildet sind.

6. Vorrichtung nach einem der Ansprüche 1 bis 4, dadurch gekennzeichnet, daß die Auflager wenigstens zwei im Bereich von gegenüberliegenden Wänden (10) des Stapelschachtes (4) angeordneten, gegensinnig drehbaren Stäben (12, 8) gebildet sind, die je eine nur auf einem Teil ihrer Bewegungsbahn in den Stapelschacht (4) eingreifende Auflagerfläche (20) aufweisen.

7. Vorrichtung nach einem der Ansprüche 1 bis 4, dadurch gekennzeichnet, daß die Stäbe (8) aus Rundmaterial mit einer längs verlaufenden V-förmigen Nut (19) gebildet sind und ihre Drehachse (17) etwa in der Ebene der Schachtwände (10) liegt.

8. Vorrichtung nach einem der Ansprüche 1 bis 4, und 6, dadurch gekennzeichnet, daß die Stäbe (12) selbst die Auflagerfläche bilden und um eine zu ihrer Achse parallele Achse (14) drehbar angetrieben sind, wobei sie im Bereich ihrer oberen Totpunktlage in der Förderebene des zuführenden Förderers (1) liegen und die ankommende Verpackung (3) aufnehmen, sich anschließend durch den Schacht (4) bewegen und im Bereich ihrer unteren Totpunktlage die Verpackung (3) abwerfen, während sie sich auf dem Rest ihrer Bahn außerhalb des Stapelschachtes (4) bewegen.

9. Vorrichtung nach Anspruch 8, dadurch gekennzeichnet, daß jeder Drehachse (14) mit gleichem Abstand von dieser und einander gegenüberliegend zwei stabförmige Auflager (12) angeordnet sind.

10. Vorrichtung nach Anspruch 8 oder 9, dadurch gekennzeichnet, daß die stabförmigen Auflager (12) kurz vor Erreichen ihrer oberen Totpunktlage in den Schacht (4) hineinwandern.

11. Vorrichtung nach einem der Ansprüche 8 bis 10, dadurch gekennzeichnet, daß die stabförmigen Auflager (12) bei Eintritt in den Schacht (4) in der Förderebene des zuführenden Förderers (1) liegen.

12. Vorrichtung nach einem der Ansprüche 8 bis 11, dadurch gekennzeichnet, daß die Stäbe (12) mit jeweils gemeinsamer Drehachse (14) außerhalb des Stapelschachtes (6) miteinander verbunden und an dem Verbindungsstück (14) angetrieben sind.

13. Vorrichtung nach einem der Ansprüche 1 bis 12, dadurch gekennzeichnet, daß zwischen dem Ende des zuführenden Förderers (1) und der ihm zugekehrten Vorderwand (5) des Stapelschachtes (4) eine in der Förderebene liegende Brücke (8) angeordnet ist.

14. Vorrichtung nach einem der Ansprüche 1 bis 13, dadurch gekennzeichnet, daß die Rückwand (6) des Stapelschachtes (4) lediglich von einzelnen senkrechten Leisten (11) gebildet ist.

15. Vorrichtung nach einem der Ansprüche 1 bis 14, wobei die Verpackungen rechteckigen Querschnitt aufweisen, dadurch gekennzeichnet, daß die Verpackungen (3) mit ihrer längeren Seite quer zur Förderrichtung auf dem Förderer (1) liegen und die Auflager (12, 16, 18) in bzw. parallel zur Förderrichtung angeordnet sind.

p

FIG. 1

FIG. 2

FIG. 3

FIG. 5

FIG. 4

FIG. 6